# EUROPEAN PATENT APPLICATION

(11) **EP 4 390 446 A1**
(43) Date of publication of application: **26.06.2024**
(21) Application number: 22215672.1
(22) Date of filing: 21.12.2022
(51) Int. Cl.: G01S 7/481, G01S 17/86, G01S 17/87, G01S 17/894, G01C 11/02, G01C 15/00

(54) **WIDE-ANGLE RANGE IMAGING MODULE AND REALITY CAPTURE DEVICE COMPRISING A WIDE-ANGLE RANGE IMAGING MODULE**

(71) Applicant: Hexagon Technology Center GmbH, 9435 Heerbrugg (CH)
(72) Inventor: BESTLER, Simon, D-88085 Langenargen (DE); KIPFER, Peter, CH-9443 Widnau (CH); WALSER, Andreas, CH-9000 St.Gallen (CH); WOHLGENANNT, Rainer, A-6833 Klaus (AT); MASUR, Jan-Michael, D-88131 Lindau (DE)
(74) Representative: Kaminski Harmann

(57) **Abstract**

The invention relates to a range imaging module and a reality capture device comprising a range imaging module and configured to generate 3D measurement data for generating a digital representation of an environment. The range imaging module comprises a cover (15), which is transparent for at least part of distance measurement radiation (17) of the range imaging module and which comprises a band-pass filter coating (16). The cover (15) with the band-pass filter coating (16) is arranged in a collimated beam region outside an imaging unit (9) of the range imaging module and encloses the imaging unit (9), so that returning distance measurement radiation (17) from an imaging field of view of the imaging unit (9) first passes the cover (15) with the band-pass filter coating (16) and then the imaging unit (9).

## Description

The present invention relates to a range imaging module and a reality capture device comprising a range imaging module and configured to generate 3D measurement data for generating a digital representation of an environment.

By way of example, reality capture of a building and surrounding terrain is of interest for architects or craftsmen in order to quickly assess an actual condition of a room or a construction progress of a construction site, e.g. to effectively and efficiently plan the next work steps. By means of a digital visualization of the actual state, e.g. in the form of a point cloud or a vector file model, or by means of an augmented reality functionality, different options for further steps or expansion options can be examined and optionally presented to an employee or a customer in an easily accessible way.

Reality capture may also be of use for mapping the environment, e.g. for generating floor and room plans of a building, a tunnel plan of an underground facility, or a pipe map in an industrial plant.

In particular, reality capture devices may be mobile and configured to provide surveying data and referencing data at the same time, e.g. wherein at least trajectory data of the device, e.g. position and/or pose data, are provided with the probing data, e.g. lidar data and/or camera data, such that probing data of different positions and/or poses of the reality capture device can be combined into a common coordinate system. Often, reality capture devices are configured to autonomously create a 3D map of a new environment, e.g. by means of a simultaneous localization and mapping (SLAM) functionality.

Reality capture is also of interest for surveillance purposes, e.g. for monitoring a building or facility or neuralgic points within a city, such as railway stations, airports, city parks, or otherwise busy public places. Here, 3D information provides additional insights that cannot be provided by 2D imaging. For example, 3D measurement data facilitate detection of left behind objects within a surveillance area.

Acquisition of 3D measurement data by a reality capture device typically involves use of a laser scanner emitting a laser measurement beam, e.g. using pulsed electromagnetic radiation, wherein an echo is received from a backscattering surface point of the environment and a distance to the surface point is derived and associated with an angular emission direction of the associated laser measurement beam. This way, a three-dimensional point cloud is generated.

Use of a laser scanner provides high distance measuring accuracy and a wide field-of-view for surveying the environment. For example, by using a so-called two-axis laser scanner - which deflects the distance measurement beam about two orthogonal axes - a hemisphere around the laser scanner can be measured with sufficiently fast point acquisition rate. A laser scanner providing the necessary coordinate measuring accuracy and point acquisition rate is typically a high-end measurement device, which is often bulky, sensitive to environmental influence and mechanical shocks, and requires a trained operator.

One option to replace the laser scanner for the generation of the 3D measurement data could be so-called ToF-cameras (time-of-flight cameras), also referred to as RIM-cameras (range imaging cameras). A ToF-camera (instantaneously) provides a 2D image, wherein each image pixel further comprises distance information to a corresponding object point imaged by that pixel. In other words, a ToF-camera or RIM-camera instantaneously provides a 3D image.

Modern ToF sensors, e.g. so-called direct ToF sensors (dToF) or indirect ToF sensors (iToF), are now able to reach accuracies that are sufficient for reality capture applications as mentioned above. Thus, they have the potential to provide efficient and quick 3D coordinate measuring of a large area.

As with the classic LiDAR, the measuring principle of a ToF sensor requires an actively generated time-precise measurement radiation, e.g. pulsed radiation or radiation for the so-called continuous wave measurement principle. The susceptibility of ToF sensors to background light is therefore a limiting factor, particularly for outdoor use.

Complexity of blocking unwanted radiation increases - and thus the problem with susceptibility to background light is getting worse -when attempting to implement a ToF sensor in a wide-angle optical system.

It is therefore an object of the present invention to provide a range imaging module which overcomes the deficiencies of the prior art in terms of susceptibility to background light for wide-angle applications.

A further object is to provide a reality capture device which maintains or increases the coordinate measuring accuracy but has reduced technical complexity, e.g. to provide facilitated handling for an untrained operator.

A further object is to provide a reality capture device which is lighter and smaller in size, while maintaining the coordinate measuring accuracies and functionalities of prior art reality capture devices.

These objects are achieved by the realization of at least part of the characterizing features of the independent claims. Features, which further develop the invention in an alternative or advantageous manner are described in some of the other features of the independent claims and in the dependent claims.

The invention relates to a range imaging module, which comprises an emitter unit configured to emit distance measurement radiation, e.g. pulsed laser radiation or laser radiation configured to use in a continuous wave measurement principle. The range imaging module further comprises a range imaging receiver, which has a detection area with multiple photo sensitive detection elements for detecting returning parts of the distance measurement radiation. The range imaging receiver is configured to provide for each of the detection elements a distance measurement based on a time-of-flight measuring principle using the distance measurement radiation. The distance measurement radiation is emitted towards the environment and distance measurement radiation returning from the environment is imaged onto the range imaging receiver by an imaging unit of the range imaging module. For example, the range imaging receiver is configured to provide a so-called 3D-image, which is a 2D image, wherein each image pixel further comprises distance information to a corresponding object point imaged by that pixel.

Typically, the returning distance measurement radiation is in a substantially collimated state. The imaging unit thus separates a so-called collimated beam region outside the imaging unit, where the returning distance measurement radiation is in a substantially collimated state, from a converging beam region after (the returning distance measurement radiation entering or passing) the imaging unit, where the returning distance measurement radiation is in a converging state. In other words, entering the range imaging module from the outside of the range imaging module the imaging unit is the first optical measure to "intentionally" have refractive power to image the environment, i.e. returning distance measurement radiation from an imaging field of view, onto the range imaging receiver.

The range imaging module further comprises a cover being transparent for at least part of the distance measurement radiation and comprising a band-pass filter coating. The cover with the band-pass filter coating is arranged in the collimated beam region outside the imaging unit and encloses the imaging unit, so that returning distance measurement radiation from the imaging field of view of the imaging unit first passes the cover with the band-pass filter coating and then the imaging unit.

Typically, transmission by band-pass filters such as interference filters strongly depends on the angle of incidence of a ray onto the filter surface. Thanks to the inventive arrangement of the band-pass filter on the cover in the collimated beam region, neighboring rays have at best no or at least negligibly small differences in the angle of incidence on the filter surface. This allows to use a very narrow band-pass filter, e.g. based on an interference filter so that unwanted background light is effectively blocked from passing onto the range imaging receiver.

By way of example, the band-pass filter coating is arranged on an outer surface of the cover (towards the environment) and/or on an inner surface of the cover (towards the imaging optics and the range imaging receiver). For example, the band-pass filter coating is vapour-deposited on one of the surfaces of the cover.

In one embodiment, a shape of the cover is matched with the imaging unit in such a way that respective angles of incidence onto the band-pass filter coating are less than 0.5°, particularly less than 0.2°, for all chief rays (a chief ray connects an object point and the center of the entrance pupil) of the returning distance measurement radiation within the imaging field of view of the imaging unit. Depending on the aperture of a receiving lens of the imaging unit, incidence angles of marginal rays onto the band-pass filter are larger. By way of example, a beam of returning distance measurement radiation is a few mm wide and in an edge area of an ultra-wide angle receiving lens, e.g. a Fisheye lens having a field of view of at least 100°, angles of incidence of marginal rays onto the band-pass filter are 5° to 10°.

In a further embodiment, the imaging unit comprises an F-Theta lens or a fisheye lens and the cover has a spherical shape.

In particular, the band-pass filter coating is arranged on an inner surface of the cover (towards the imaging unit and the range imaging receiver) and the imaging unit and the cover are configured in such a way that a sole impact of a refractive power of the cover lies in a defocusing effect on returning distance measurement radiation when it propagates through the imaging unit onto the detection area, wherein the defocusing effect can be compensated for the full imaging field of view of the imaging unit by refocusing a receiving lens of the imaging unit. In other words, an impact on high-order wave front aberrations is reduced and the only impact of the cover on the distance measurement radiation received from all feasible incidence angles (i.e. the impact of the refractive power of the cover onto the respective angles of incidence) is only a "global" refractive power (a refractive power being the same for all incidence angels), such that it can be easily compensated by refocusing of the receiving lens to the detection area of the range imaging receiver.

In a further embodiment, the cover is configured to be essentially free of refractive power compared to a refractive power of the imaging unit, e.g. wherein an absolute value of the refractive power of the cover is 50 times, more particularly 200 times, less than an absolute value of the refractive power of the imaging unit. By way of example, the cover has a wall thickness of 1.5 mm and an absolute value of the refractive power being 50 times less than an absolute value of the refractive power of the imaging unit.

For example, the cover is made from glass substrate or an optical synthetic material, e.g. Zeonex, polycarbonate or PMMA (plexiglass).

The invention further relates to a reality capture device configured to generate 3D measurement data for generating a digital representation of an environment, wherein the reality capture device comprises a range imaging module according to one of the embodiments described above, and wherein the reality capture device is configured to generate the 3D measurement data based on range images provided by the range imaging module.

In one embodiment, the reality capture device is configured to be carried and moved by a mobile carrier, e.g. a person or a robot or a vehicle, and to be moved during a measuring process for generating the digital representation of the environment. The measuring process comprises generation of mutually referenced 3D measurement data on the basis of range images provided by the range imaging module at different locations and poses of the reality capture device. For example, the reality capture device is embodied as handheld (mobile) reality capture device.

For example, the reality capture device is configured to use localization data of a localization unit for providing referencing of the range images with respect to each other during the measuring process, wherein the localization data provide for determining pose information for a position and orientation of the reality capture device during the measuring process. For example, at least part the localization data is provided by an accessory device arranged with the reality capture device such that it is co-moving with the reality capture device, e.g. a smartphone or tablet. Alternatively or in addition, the reality capture device is configured to provide at least part of the localization data, e.g. by having its own localization unit. For example, the localization data comprise inertial measurement data.

In a further embodiment, the reality capture device is configured for simultaneous localization and mapping (SLAM) to generate a three-dimensional map based on at least one of the range images provided by the range imaging module, inertial measurement data, and 2D imaging data.

In a further embodiment, the reality capture device comprises an event detector configured to classify the 3D measurement data for detecting an event within the environment. For example, such an embodiment is used for surveillance purposes.

By way of example, the reality capture device is configured to provide three-dimensional model data based on the 3D measurement data, which may then be analyzed by means of a feature recognition algorithm to automatically recognize semantic and/or geometric features captured by the 3D measurement data, e.g. by means of using shape information provided by virtual object data from a CAD model. Such feature recognition, particularly for recognizing geometric primitives, are nowadays widely used to analyze 3D data.

In a further embodiment, the reality capture device comprises a further range imaging module according to one of the embodiments described above, wherein the range imaging module and the further range imaging module are each configured to provide an imaging field of view of 90°, particularly 180°, for generating respective range images. For example, the reality capture device comprises two range imaging modules, wherein each of the range imaging modules provides 180° field of view and the modules are arranged with respect to each other such that the reality capture device has an instantaneous 360° field of view for generating range images. Such an arrangement of multiple range imaging module may provide benefits both for a mobile usecase wherein the reality capture device is configured to be moved during a measurement process, e.g. as described above, and for a static usecase, e.g. for surveillance purposes.

The range imaging module and the reality capture device according to the different aspects of the invention are described or explained in more detail below, purely by way of example, with reference to working examples shown schematically in the drawing. Identical elements are labelled with the same reference numerals in the figures. The described embodiments are generally not shown true to scale and they are also not to be interpreted as limiting the invention. Specifically,
- Fig. 1:: exemplarily shows the strong dependency of a band-pass filter on the angle of incident light;
- Fig. 2:: schematically shows an embodiment of a range imaging module as it may form the basis for the range imaging module according to the invention;
- Fig. 3:: schematically depicts an inventive arrangement of a receiving channel of a range imaging module according to the invention;
- Fig. 4:: depicts two exemplary embodiments of a reality capture device according to the invention for mobile surveying;
- Fig. 5:: depicts two further exemplary embodiments of a reality capture device according to the invention, e.g. for monitoring of a neuralgic area.

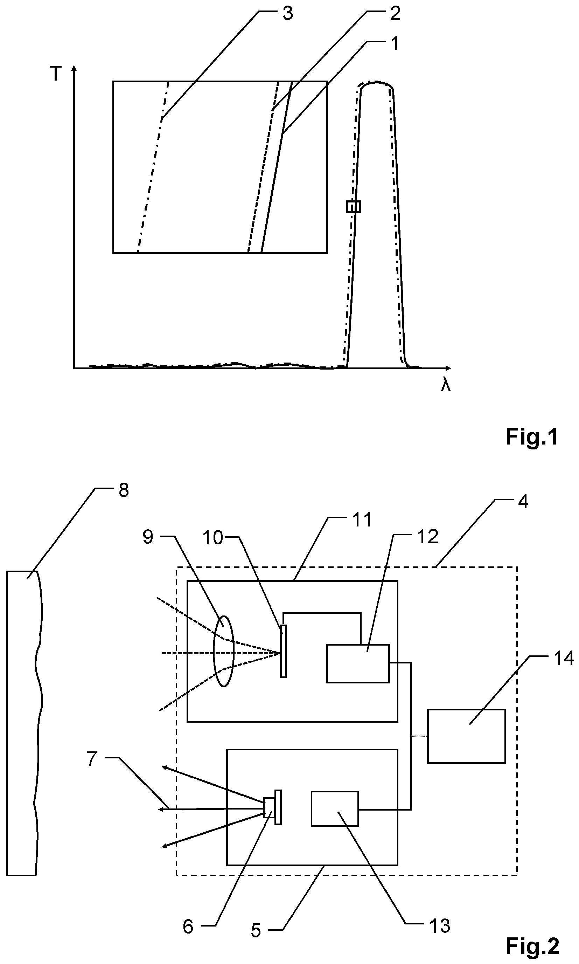

**Figure 1** exemplarily shows the strong dependency of a band-pass filter, e.g. an interference filter, on the angle of the incident light. The figure shows transmittance T versus wavelength λ for three different incidence angles. The zoomed-out portion relates to the indicated range of 45 % to 55 % transmittance and covers a wavelength range of 890 nm to 905 nm. The curve 1 on the right of the zoomed out portion (solid curve) shows 0° incidence, the curve 2 in the middle (dashed curve) shows 5° incidence, and the curve 3 on the left (dash-dotted curve) shows 15° incidence.

By way of example, this dependence on angle of incidence can be a problem for so-called iToF sensors, which have a long measuring time and the transmitted light is averaged over many periods. In case of insufficient blocking of the background light due to misalignment or changes in the angle of incidence, unwanted background light is also measured and accumulated during this long measurement time. This increases the noise and leads to early saturation of the sensor.

So-called dToF sensors usually consist of many microcells, e.g. embodied as SPADs (single photon avalanche diodes), wherein several of these microcells are combined into one pixel, e.g. in the analog domain directly on the sensor or digitally after a quantization level. When a photon hits a SPAD of a pixel, it triggers and delivers an electrical pulse. By linking several SPADs within the same pixel, a measurable electrical pulse is generated when several photons arrive in one pulse. If a SPAD was triggered, it is dead for a certain time (e.g. 10 to 100 ns) and needs this time to activate itself again (recovery time). Strong background light can mean that many SPADs are/are constantly being triggered and are not active for actually accumulating photons of the actual light pulse.

**Figure 2** schematically shows an embodiment of a range imaging module 4 as it may form the basis for the range imaging module according to the invention. The module comprises an emitter unit 5 comprising a radiation source 6 configured to emit distance measurement radiation 7 towards an object 8 in the environment. Distance measurement radiation returning from the environment, which is in a substantially collimated state, is imaged by an imaging unit 9 onto a range imaging receiver 10, which are both part of a receiver unit 11. For example, the receiver unit 11 further comprises a range measuring circuit 12, which is connected to a control circuit 13 of the emitter unit 5. Range measuring circuit 12 of the receiver unit 11 and the control circuit 13 of the emitter unit 5 are connected to a processor unit 14 configured to provide the 3D measurement data for generating a digital representation of an environment.

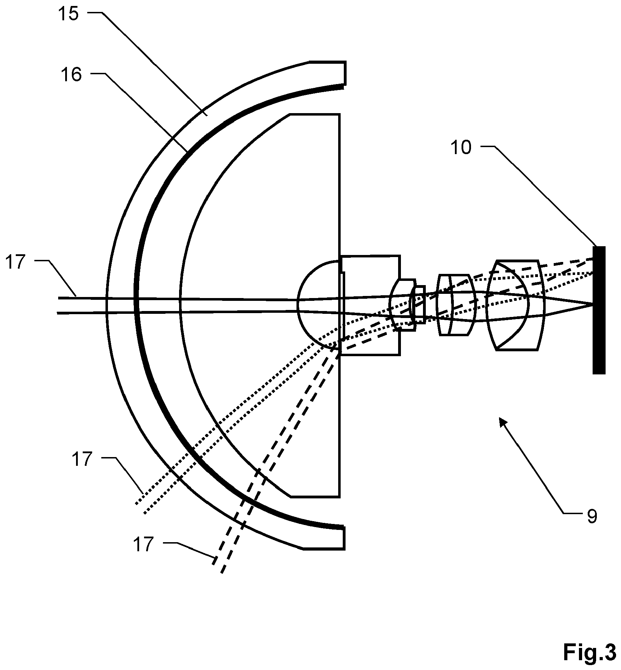

**Figure 3** schematically depicts an inventive arrangement of a receiving channel of a range imaging module according to the invention. A cover 15 with a band-pass filter coating 16 on an inner surface of the cover 15 is arranged in the collimated beam region outside an imaging unit 9, wherein the cover 15 encloses the imaging unit 9, so that returning distance measurement radiation 17 from the imaging field of view of the imaging unit first passes the cover 15 with the band-pass filter coating 16 and then the imaging unit 9.

Outer and inner surfaces of the cover 15 are free-form surfaces that are optimized depending on the imaging unit 9 so that the incident angles of the returning distance measurement radiation 17 onto the band-pass filter coating 16 are minimal for all individual rays within the field-of-view of the imaging unit 9. The refractive power (lensing power) of the cover 15 is negligible or can be compensated for the full field-of-view of the imaging unit 9 by adapting a focus setting of the imaging unit 9 to image the returning distance measurement radiation 17 onto the range imaging receiver 10.

Normal incidence (0°) for all rays of the returning distance measurement radiation would be the best case. By way of example, for an imaging lens with large field-of-view and small entrance pupils, e.g. such as a fisheye lens, a spherical or nearly spherical cover shape is used to provide normal or close to normal incidence.

In the figure, the band-pass filter coating 16 is realized by applying an optical coating on the inner side of the cover 15. For example, this has the advantage of providing protection of the coating from damage or that the filter coating does not define the appearance (e.g. color) of the range imaging module from the outside. Alternatively, a band-pass filter coating on the outer side of the cover is feasible as well and, for example, has the advantage of facilitated production/application of the coating.

The material of the cover 15 can be freely chosen with the restriction that the refractive power of the design can be compensated or neglected. For example, the material of the cover 15 is a glass substrate or an optical synthetic material like Zeonex, polycarbonate (PC) and PMMA. It shall be transparent for the signal wavelength of the distance measurement radiation and can contain pigments or dyes for obtaining a specific visual appearance or color.

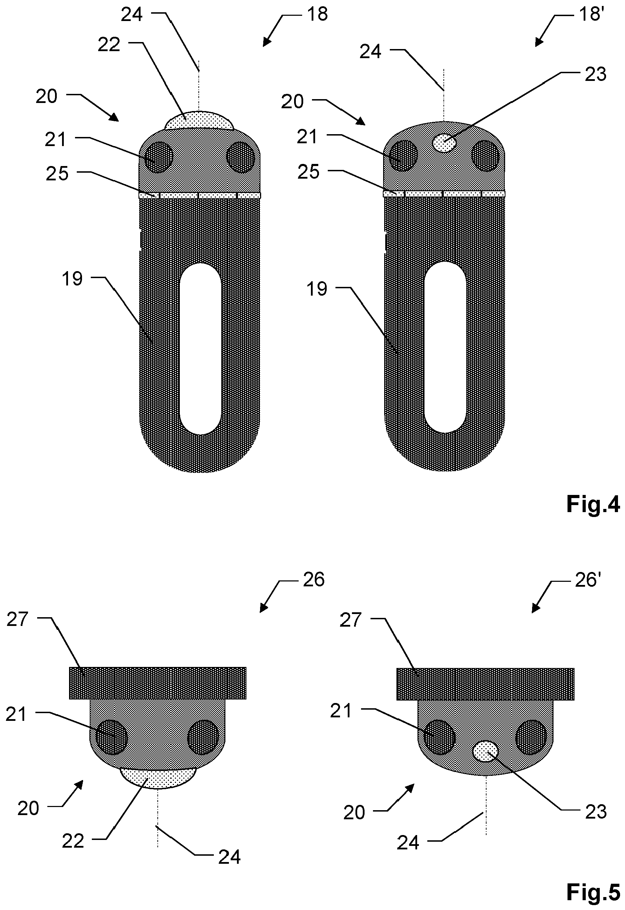

**Figure 4** depicts two exemplary embodiments of a reality capture device 18, 18' according to the invention. Each device comprises a handle portion 19 and a sensor unit 20. Each sensor unit 20 comprises several wide-angle range imaging modules 21 according to the invention. The reality capture device 18 on the left further comprises a wide-angle imaging unit 22 comprising at least one "regular", i.e. two-dimensional (2D), camera. The reality capture device 18' depicted on the right comprises several high-resolution (HR) 2D cameras 23, e.g. RGB cameras. Of course, a different number of range imaging modules and different combinations with other sensors and camera arrangements can be chosen, depending on the shape of the device and the necessary or desired field of view.

The depicted reality capture devices 18, 18' are each embodied as handheld mobile device as it is of interest in the field of architecture or real estate, e.g. wherein an architect or a potential home buyer would like to have a 3D model of a room or the entire building for providing improved visualization of details or potential extension plans.

In general, range imaging modules, sometimes also referred to as ToF cameras, measure a time delay between the emission of a light signal and the detection of the back-reflected signal. Different kinds of ToF cameras exist that may be used. Some embodiments of the reality capture device according to the invention may comprise ToF cameras that use Direct-Time-of-Flight (dToF), i.e. direct measurement of the time delay between two adjacent pulses. These are also referred to as Pulsed-Time-of-Flight (pToF). Other embodiments may comprise ToF cameras that use indirect-Time-of-Flight (iToF), i.e. using a periodic waveform and phase delay to obtain the time delay. These are also referred to as Continuous-Wave Time-of-Flight (cwToF) cameras.

The environment is surveyed during the movement of the mobile reality capture device 18, 18', wherein the data from the range imaging modules 21 and possibly other sensors of the sensor unit 20 captured at different locations are referenced to each other by means of the localization unit, e.g. within the scope of a SLAM (simultaneous localization and mapping) functionality. Because of the movement of the user, objects and a spatial area can be measured from different angles, as a result of which, shadowing and/or dead angles can be avoided.

Each range imaging module 21 has one or more laser emitters, arranged and configured to emit light pulses towards surfaces in the surrounding that lie in a field of view of a range imaging sensor of the same range imaging module. For the purposes of performing SLAM, the light pulses may be emitted discretely and need not be distributed to cover the entire field of view.

A lateral surface of the sensor unit 20 defines a standing axis 24 of the sensor unit 20, wherein in each of the shown exemplary embodiments the lateral surface is circumferentially arranged around the standing axis. By way of example, the device is designed to be held during a measuring process so that the standing axis 24 is upright, i.e. a vertical axis. In the examples shown, each of the reality capture devices 18, 18' comprises three range imaging modules 21 (for each device only two being visible in this view), e.g. wherein each module is configured to provide an imaging field of view of 120°, and the range imaging modules 21 are positioned that their combined imaging field of views provide an all-around imaging field of view of the reality capture device 18, 18', e.g. a full 360° panoramic field of view.

The mobile reality capture device 18, 18' may further include other sensors or have additional auxiliary device interfaces, e.g. an interface for attaching a GNSS receiver or a display. In particular, the mobile reality capture device 18, 18' is configured to communicate with an external processing unit of a companion device, e.g. a computer, tablet or smartphone, which is configured to process at least parts of the measurement data of the reality capture device 18, 18', e.g. for referencing the regular camera data with data of the range imaging modules or for providing extended display functionality.

The localization unit may be configured to determine a trajectory of the mobile reality capture device 18, 18' with six degrees of freedom (6DOF), i.e. involving position and orientation (pose) of the mobile reality capture device. In particular, each of the mobile reality capture devices 18, 18' may be configured for simultaneous localization and mapping (SLAM) to generate a three-dimensional map by involving at least one of data of an inertial measurement unit (IMU-SLAM), image data of a conventional camera 22, 23 for visual SLAM (V-SLAM), and - similar to LIDAR-SLAM - using data of the range imaging modules 21 - ToF-based SLAM mapping (ToF-SLAM). This approach is described generically in the paper "SLAM combining ToF and High-Resolution cameras" by V. Castañeda, D. Mateus and N. Navab (Computer Aided Medical Procedures (CAMP), Technische Universitat München).

In the examples shown, the reality capture devices 18,18' further comprise a light indicator 25, e.g. for indicating a device status in such a way that the status indication looks uniform in all azimuthal directions around the standing axis of the reality capture device. Furthermore, the light indicator may be configured to provide guiding instructions for the operator.

**Figure 5** depicts two exemplary embodiments of a reality capture device 26, 26' according to the invention. Each of the shown reality capture devices is configured to be fixedly mounted in the environment, e.g. at the ceiling of a room. Similarly to the mobile embodiments described above, each of the devices 26, 26' comprises a sensor unit 20 with several wide-angle range imaging modules 21 according to the invention. The reality capture device 26 on the left further comprises a wide-angle 2D imaging unit 22 comprising at least one "regular", i.e. two-dimensional (2D), camera. The reality capture device 26' depicted on the right comprises several high-resolution (HR) 2D cameras 23, e.g. RGB cameras.

The devices 26, 26' are attached to a base 27 which can be fixedly mounted on a mobile or immobile object, e.g. a vehicle or a roof or wall. The base 17 can be mounted so that a standing axis 24 is vertical or horizontal or at any angle in between.

By way of example, the sensor unit 20 of the mounted reality capture device 26 depicted on the left comprises three range imaging modules 21 (only two of these are visible in this view) and a single fisheye camera 22 comprising a fisheye lens for capturing image data in 360° around the standing axis 24 of the device. The optical axis of the fisheye camera may coincide with or be parallel to the standing axis 24.

The sensor unit 20 of the mounted reality capture device 26' depicted on the right comprises the same arrangement of range imaging modules 21 than the embodiment shown on the left. Instead of a fisheye camera, the 2D imaging unit in this embodiment comprises three cameras 23 (only one being visible in this view) that arranged between the three range imaging modules 21. The three cameras are arranged so that they capture image data in 360° around the standing axis 24.

Although the invention is illustrated above, partly with reference to some preferred embodiments, it must be understood that numerous modifications and combinations of different features of the embodiments can be made. All of these modifications lie within the scope of the appended claims.

## Claims

1. Range imaging module (4, 21), which comprises
• an emitter unit (5) configured to emit distance measurement radiation (7),
• a range imaging receiver (10) comprising a detection area with multiple photo sensitive detection elements for detecting returning parts of the distance measurement radiation (17), wherein the range imaging receiver (10) is configured to provide for each of the detection elements a distance measurement based on a time-of-flight measuring principle using the distance measurement radiation (7, 17), and
• an imaging unit (9) configured to image substantially collimated returning distance measurement radiation (17) from an imaging field of view, particularly an imaging field of view of 100°, onto the detection area, thereby separating a collimated beam region outside the imaging unit (9), where the returning distance measurement radiation (17) is in a substantially collimated state, from a converging beam region after the imaging unit (9), where the returning distance measurement radiation is in a converging state,
**characterized in that**
the range imaging module (4, 21) comprises a cover (15) being transparent for at least part of the distance measurement radiation (7, 17) and comprising a band-pass filter coating (16), wherein the cover (15) with the band-pass filter coating (16) is arranged in the collimated beam region outside the imaging unit (9) and encloses the imaging unit (9), so that returning distance measurement radiation (17) from the imaging field of view of the imaging unit (9) first passes the cover (15) with the band-pass filter coating (16) and then the imaging unit (9).

2. Range imaging module (4, 21) according to claim 1, wherein the band-pass filter coating (16) is arranged on an inner surface of the cover (15).

3. Range imaging module (4, 21) according to claim 1 or 2, wherein the band-pass filter coating (16) is arranged on an outer surface of the cover (15).

4. Range imaging module (4, 21) according to one of the preceding claims, wherein a shape of the cover (15) is matched with the imaging unit (9) in such a way that respective angles of incidence onto the band-pass filter coating (16) are less than 0.5°, particularly less than 0.2°, for all chief rays of the returning distance measurement radiation (17) within the imaging field of view of the imaging unit (9).

5. Range imaging module (4, 21) according to claim 4, wherein the band-pass filter coating (16) is arranged on an inner surface of the cover (15) and the imaging unit (9) and the cover (15) are configured in such a way that a sole impact of a refractive power of the cover (15) lies in a defocusing effect on returning distance measurement radiation (17) when it propagates through the imaging unit (9) onto the detection area, wherein the defocusing effect can be compensated for the full imaging field of view of the imaging unit (9) by refocusing a receiving lens of the imaging unit (9).

6. Range imaging module (4, 21) according to one of the preceding claims, wherein the imaging unit (9) comprises a F-Theta lens or a fisheye lens and the cover (15) has a spherical shape.

7. Range imaging module (4, 21) according to one of the preceding claims, wherein the cover (15) is configured to be essentially free of refractive power compared to a refractive power of the imaging unit (9), particularly wherein an absolute value of the refractive power of the cover (15) is 50 times, more particularly 200 times, less than an absolute value of the refractive power of the imaging unit (9).

8. Range imaging module (4, 21) according to one of the preceding claims, wherein the cover (15) is made from glass substrate or an optical synthetic material, particularly Zeonex, polycarbonate or PMMA.

9. Reality capture device (18, 18', 26, 26') configured to generate 3D measurement data for generating a digital representation of an environment,
**characterized in that**
the reality capture device (18, 18', 26, 26') comprises a range imaging module (4, 21) according to one of claims 1 to 8 and is configured to generate the 3D measurement data based on range images provided by the range imaging module (4, 21).

10. Reality capture device (18, 18') according to claim 9, wherein the reality capture device (18, 18') is configured to be carried and moved by a mobile carrier, particularly a person or a robot or a vehicle, and to be moved during a measuring process for generating the digital representation of the environment, wherein the measuring process comprises generation of mutually referenced 3D measurement data on the basis of range images provided by the range imaging module (4, 21) at different locations and poses of the reality capture device (18, 18').

11. Reality capture device (18, 18') according to claim 10, wherein the reality capture device (18, 18') is configured to use localization data of a localization unit for providing referencing of the range images with respect to each other during the measuring process, wherein the localization data provide for determining pose information for a position and orientation of the reality capture device (18, 18') during the measuring process.

12. Reality capture device (18, 18') according to claim 11, wherein the localization data comprise inertial measurement data.

13. Reality capture device (18, 18') according to one of claims 10 to 12, wherein the reality capture device (18, 18') is configured for simultaneous localization and mapping (SLAM) to generate a three-dimensional map based on at least one of the range images provided by the range imaging module (4, 21), inertial measurement data, and 2D imaging data.

14. Reality capture device (18, 18', 26, 26') according to one of claims 9 to 13, wherein the reality capture device comprises an event detector configured to classify the 3D measurement data for detecting an event within the environment.

15. Reality capture device (18, 18', 26, 26') according to one of claims 9 to 14, wherein the reality capture device (18, 18', 26, 26') comprises a further range imaging module (4, 21) according to one of claims 1 to 8, wherein the range imaging module (4, 21) and the further range imaging module (4, 21) are each configured to provide an imaging field of view of 90°, particularly 180°, for generating respective range images.
